# EUROPÄISCHE PATENTSCHRIFT

(11) **EP 3 436 719 B1**
(45) Veröffentlichungstag und Bekanntmachung des Hinweises auf die Patenterteilung: **03.11.2021**
(21) Anmeldenummer: 17725183.2
(22) Anmeldetag: 03.05.2017
(51) Int. Cl.: F16F 13/26

(54) **HYDROLAGER**
HYDROMOUNT
PALIER HYDRAULIQUE

(30) Priorität: 10.06.2016 DE 102016110703
(43) Veröffentlichungstag der Anmeldung: 06.02.2019
(73) Patentinhaber: Vibracoustic SE, 64293 Darmstadt (DE)
(72) Erfinder: BECKMANN, Wolfgang, 64289 Darmstadt (DE); STEIN, Kurt, 69509 Mörlenbach (DE)
(74) Vertreter: Patentanwälte Olbricht Buchhold Keulertz
(86) Internationale Anmeldenummer: PCT/EP2017/060581
(87) Internationale Veröffentlichungsnummer: WO 2017/211507

(56) Entgegenhaltungen:
- EP-A1- 1 426 651
- DE-A1- 4 141 332
- DE-A1- 10 121 399
- DE-A1-102005 028 337
- US-A- 4 796 874
- US-A- 4 877 225

## Beschreibung

Die vorliegende Erfindung betrifft ein Hydrolager, insbesondere zur Lagerung eines Kraftfahrzeugmotors an einer Fahrzeugkarosserie, mit einer Tragfeder, die einen Lagerkern abstützt und eine Arbeitskammer umschließt, und einer Ausgleichskammer, die von der Arbeitskammer durch eine Zwischenplatte getrennt und von einer Ausgleichsmembran begrenzt ist, wobei die Ausgleichskammer und die Arbeitskammer mit einer Flüssigkeit gefüllt und über einen in der Zwischenplatte angeordneten Dämpfungskanal und über einen Bypasskanal, dem ein schaltbares Ventil zugeordnet ist, miteinander verbunden sind, wobei das Ventil auf Seiten der Arbeitskammer angeordnet ist, mittels eines Elektromagneten schaltbar ist und ein Stellglied aufweist, das in axialer Richtung verstellbar ist.

Derartige hydraulisch dämpfende Lager werden insbesondere zur Abstützung eines Kraftfahrzeugmotors an einer Fahrzeugkarosserie verwendet, um einerseits die von Fahrbahnunebenheiten hervorgerufenen Schwingungen zu dämpfen und andererseits akustische Schwingungen zu isolieren. Die von Fahrbahnunebenheiten hervorgerufenen Schwingungen werden durch ein hydraulisches System gedämpft, wobei das hydraulische System durch die flüssigkeitsgedämpfte Arbeitskammer, die Ausgleichskammer und den die beiden Kammern miteinander verbindenden Dämpfungskanal gebildet wird. Die Funktionsweise des hydraulischen Systems kann wie folgt beschrieben werden: Die Arbeitskammer wird durch eine Bewegung der Tragfeder vergrößert oder verkleinert, wobei die in der Arbeitskammer befindliche Flüssigkeit über den Dämpfungskanal in die Ausgleichskammer gedrückt wird. Die im Dämpfungskanal schwingende Flüssigkeit bewirkt eine Dämpfung.

Schaltbare Lager weisen zusätzlich eine Schaltvorrichtung auf, mit der das Lager an einen Fahrbetrieb oder einen Leerlaufbetrieb des Motors angepasst werden kann.

Aus der DE 41 41 332 C2 ist ein derartiges schaltbares Hydrolager bekannt, das eine in der Zwischenplatte angeordnete Durchtrittsöffnung aufweist, die mittels eines stopfenförmigen Wulstes ansteuerbar ist. Der stopfenförmige Wulst ist mittels einer Steuerdruckdose verstellbar. Die Steuerdruckdose ist je nach Ausführungsform mit einem Unterdruck oder einem Überdruck beaufschlagbar. Die Beaufschlagung kann durch einen Unterdruckspeicher oder durch einen Pneumatikanschluss erfolgen.

DE 101 21 399 A1 offenbart ein hydraulisch gedämpftes Aggregatelager, das eine Arbeitskammer und eine Ausgleichskammer aufweist. Die Arbeitskammer und die Ausgleichskammer sind von einer Zwischenwand getrennt, in welcher eine Durchgangsöffnung vorgesehen ist, die die Arbeitskammer mit der Ausgleichskammer verbindet. In der Durchgangsöffnung ist zudem ein Kolben zum Öffnen bzw. Schließen der Durchgangsöffnung vorgesehen. Der Kolben kann mittels einer Betätigungseinrichtung, insbesondere einem elektromechanischen Aktuator, entlang der axialen Richtung des Aggregatelagers verschoben werden.

Aus US 4,877,225 A ist ein hydraulisch dämpfendes Lager bekannt. Das Lager weist eine Fluidkammer auf, die durch eine Trennwand in eine obere Fluidkammer und eine untere Fluidkammer getrennt ist. Die Trennwand weist ein Durchgangsloch auf, welches die Fluidkammern miteinander verbindet. In dem Durchgangsloch ist ein Ventil angeordnet, welches axial beweglich und um seine eigene Achse rotierbar ist. Das Ventil dient zum Öffnen bzw. Verschließen des Durchgangslochs und ist mit einem Aktuator verbunden.

Die EP 1 426 651 A1 offenbart ein Hydrolager, das einen Drosselkanal und einen Bypasskanal aufweist. Die Kanäle verbinden jeweils eine Arbeitskammer mit einer Ausgleichskammer. Dem Bypasskanal ist ein Schieber mit einer Bohrung zugeordnet. Der Schieber kann in radialer Richtung bewegt werden und durch die Bohrung den Bypasskanal öffnen und verschließen. Die Bewegung des Schiebers erfolgt dabei durch magnetische Anregung.

Es ist Aufgabe der Erfindung, ein Hydrolager mit einem elektromagnetisch schaltbaren Ventil zu schaffen, das geringere Schaltkräfte benötigt.

Die Aufgabe wird durch ein Hydrolager nach Anspruch 1 gelöst. Vorteilhafte Ausgestaltungen sind Gegenstand der Unteransprüche.

Bei dem erfindungsgemäßen Hydrolager weist das Ventil ein Gehäuse mit einer zentralen Führung auf und ist ausgebildet, auf Seiten der Arbeitskammer aus radialer Richtung angeströmt zu werden.

Das Ventil dient dem Öffnen und Schließen des Bypasskanals. Dabei wird grundsätzlich zwischen dem Fahrbetrieb und dem Leerlaufbetrieb des Fahrzeugs unterschieden. Im Fahrbetrieb wird der Bypasskanal durch das Ventil verschlossen. In diesem Fall ist die Arbeitskammer mit der Ausgleichskammer lediglich über den in der Zwischenplatte angeordneten Dämpfungskanal flüssigkeitsleitend verbunden. Dadurch wird die Dämpfung von fahrbahnerregten Schwingungen erzielt, die üblicherweise eine große Amplitude bei geringer Frequenz haben. Im Leerlaufbetrieb wird der Bypasskanal durch das Ventil geöffnet, sodass dieser zusätzlich die Arbeitskammer mit der Ausgleichkammer flüssigkeitsleitend verbindet. Über den zusätzlichen Kanal können motorerregte Schwingungen, die üblicherweise eine hohe Frequenz bei geringer Amplitude haben, wirksam isoliert werden.

Durch die Anordnung des Ventils auf Seiten der Arbeitskammer wird die auf das Ventil wirkende Last durch das Fluid in der Arbeitskammer erheblich reduziert, sodass gleichsam die Schaltkräfte erheblich reduziert werden können. Durch die Schaltung mittels eines Elektromagneten muss ein Pneumatikanschluss nicht bereitgestellt werden. Ein Vorhalten eines solchen Anschlusses entfällt damit.

Die Anströmung aus radialer Richtung verringert weiter erheblich die auf das Ventil wirkende Last in axialer Richtung und damit die Last in zur Schaltrichtung des Ventils entgegengesetzter Richtung. Somit wird eine weitere Reduktion der nötigen Schaltkräfte erreicht.

Das Stellglied kann beispielsweise ein Schieber sein. Das Stellglied kann so durch eine Bewegung in axialer Richtung den Bypasskanal öffnen oder verschließen.

Vorteilhaft weist das Stellglied eine Rückstellfeder zum Schließen des Ventils auf. Der Elektromagnet dient somit ausschließlich zum Öffnen des Ventils. Das Stellglied des Ventils wird so durch die Rückstellfeder automatisch in die geschlossene Position zurückgeführt, sobald der Elektromagnet nicht geschaltet ist.

In einer vorteilhaften Ausgestaltung ist das Stellglied T-förmig ausgebildet.

Vorteilhaft weist das Stellglied wenigstens ein Dichtelement an seinem Außenumfang auf. Das Dichtelement dient dem Abdichten des Bypasskanals. Das Dichtelement kann insbesondere ein Dichtring sein. Vorzugsweise weist das Stellglied zwei Dichtringe an seinem Außenumfang auf, die derart angeordnet sind, dass sich zusätzliche Kräfte in Axialrichtung, die beispielsweise aus Druckdifferenzen resultieren, gegenseitig kompensieren, sodass keine zusätzlichen Kräfte auf das Stellglied wirken.

Vorteilhaft führt die Führung das Stellglied und die Rückstellfeder.

Vorteilhaft weist das Ventil Ventilöffnungen auf, die am Außenumfang des Ventils angeordnet sind.

Nachfolgend wird die Erfindung anhand eines Ausführungsbeispiels näher beschrieben, das in den Zeichnungen schematisch dargestellt ist. Hierbei zeigt:
- Fig. 1: einen Vertikalschnitt durch eine Ausführungsform eines erfindungsgemäßen Hydrolagers; und
- Fig. 2: eine vergrößerte Ansicht des Hydrolagers aus Fig. 1, wobei das Ventil auf der linken Seite im geöffneten Zustand und auf der rechten Seite im geschlossenen Zustand dargestellt ist.

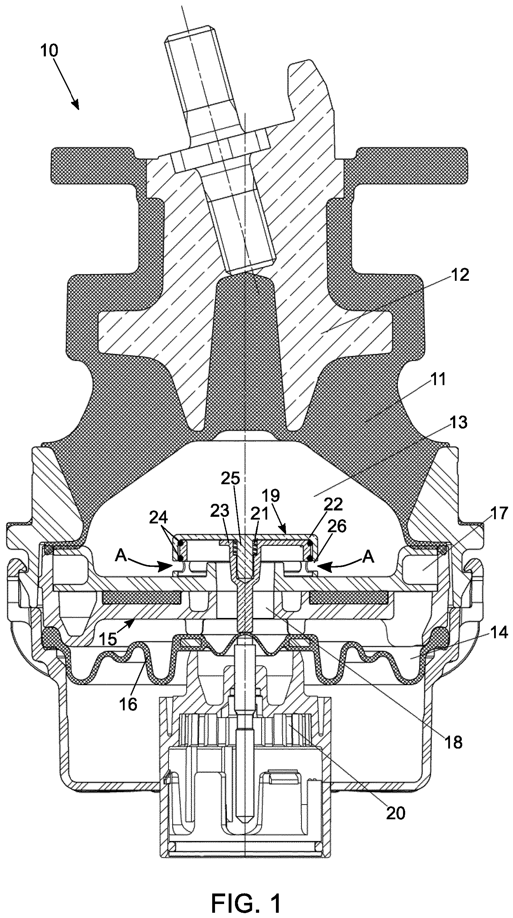

Fig. 1 zeigt ein Hydrolager 10 zur Lagerung eines nicht dargestellten Kraftfahrzeugmotors an einer nicht dargestellten Fahrzeugkarosserie. Das Hydrolager weist eine Tragfeder 11 aus einem elastomeren Werkstoff zur Abstützung eines einvulkanisierten Lagerkerns 12 auf. An dem Lagerkern 12 ist der Motor befestigt. Die Tragfeder 11 begrenzt eine Arbeitskammer 13, die mittels einer Zwischenplatte 15 von einer Ausgleichskammer 14 getrennt ist. Die Ausgleichskammer 14 wird von einer Ausgleichsmembran 16 begrenzt, die auch als Rollbalg bezeichnet wird. Die Kammern 13 und 14 sind mit einer hydraulischen Flüssigkeit befüllt und über einen in der Zwischenplatte 15 angeordneten Dämpfungskanal 17 flüssigkeitsleitend miteinander verbunden. Weiterhin sind die Arbeitskammer 13 und die Ausgleichskammer 14 über einen Bypasskanal 18 flüssigkeitsleitend miteinander verbunden. Der Bypasskanal 18 ist mittels eines Ventils 19 ansteuerbar. Das Ventil 19 ist auf Seiten der Arbeitskammer 13 angeordnet.

Das Ventil 19 ist derart ausgebildet, dass es auf Seiten der Arbeitskammer 13 aus radialer Richtung in Richtung des Pfeils A angeströmt wird. Das Ventil 19 erstreckt sich zu diesem Zweck auf Seiten der Arbeitskammer 13 in radialer Richtung. Die Ventilöffnungen 26 sind die am Außenumfang des Ventils 19 angeordnet, sodass das Fluid nur aus radialer Richtung in den Kanal 18 einströmen kann. Das Ventil 19 weist ein Stellglied 23 auf, das in axialer Richtung verstellbar ist. Das Stellglied 23 ist als Schieber ausgebildet. Das Stellglied 23 wird durch einen Elektromagneten 20 in eine geöffnete Position bewegt, wenn der Elektromagnet 20 geschaltet ist. Sobald der Elektromagnet 20 nicht mehr geschaltet ist, wird das Stellglied 23 durch eine Rückstellfeder 21 in eine Schließposition zurückgeführt, sodass der Bypasskanal 18 verschlossen ist. Das Stellglied 23 ist im vorliegenden Fall T-förmig ausgebildet. Das Stellglied 23 weist an seinem Außenumfang als Dichtungsringe ausgebildete Dichtelemente 24 zum dichten Verschließen des Bypasskanals 18 im geschlossenen Zustand auf. Die Dichtungsringe 24 sind derart angeordnet, dass durch Druckdifferenzen hervorgerufene Axialkräfte aufgehoben werden, sodass auf das Stellglied 23 keine weiteren Kräfte wirken.

Das Ventil 19 weist ein Gehäuse 22 mit einer zentralen Führung 25 auf. Die zentrale Führung 25 dient sowohl als Führung für das Stellglied 23 als auch für die Rückstellfeder 21.

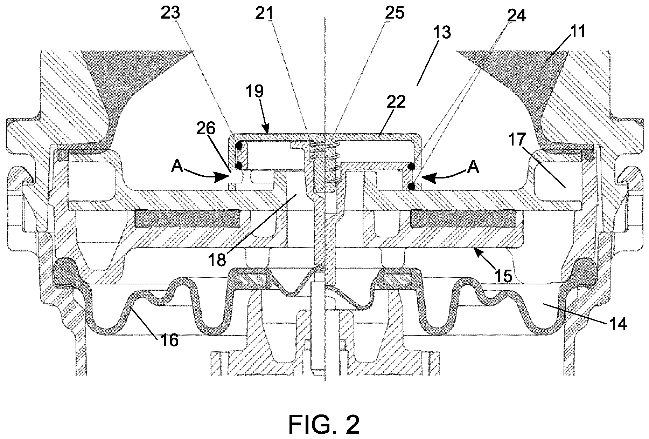

Fig. 2 zeigt das Hydrolager 10 aus Fig. 1 in vergrößerter Ansicht des Ventilbereichs, wobei die linke Seite im geöffneten Zustand des Ventils 19 und die rechte Seite im geschlossenen Zustand des Ventils 19 dargestellt ist.

Auf der linken Seite der Symmetrieachse ist das Lager 10 im Leerlaufbetrieb gezeigt. Dabei ist das Stellglied 23 durch den Elektromagneten 20 in seine Anschlagposition gebracht, sodass das Stellglied 23 an dem Gehäuse 22 anliegt. Der Bypasskanal 18 ist geöffnet. Die Rückstellfeder 21 ist durch die auf das Stellglied 23 wirkende Axialkraft komprimiert. In diesem Zustand verbindet der Bypasskanal 18 zusätzlich zu dem Dämpfungskanal 17 die Arbeitskammer 13 mit der Ausgleichkammer 14 flüssigkeitsleitend. Durch den zusätzlichen Kanal können motorerregte Schwingungen wirksam isoliert werden, ohne dass diese eine Dämpfung hervorrufen.

Die rechts von der Symmetrieachse gezeigte Teilansicht stellt den Zustand dar, den das Hydrolager 10 im Fahrbetrieb einnimmt, in welchem der Elektromagnet nicht geschaltet ist. Die Rückstellfeder 21 ist entspannt. Das Stellglied ist in seine untere Position gebracht, in der das Stellglied den Bypasskanal 18 versperrt, sodass die Arbeitskammer 13 und die Ausgleichskammer 14 nur noch über dem Dämpfungskanal 17 flüssigkeitsleitend miteinander verbunden sind. In diesem Zustand wird eine Dämpfung von fahrbahnerregten Schwingungen erzielt.

### Bezugszeichenliste

- 10: Hydrolager
- 11: Tragfeder
- 12: Lagerkern
- 13: Arbeitskammer
- 14: Ausgleichskammer
- 15: Zwischenplatte
- 16: Ausgleichsmembran
- 17: Dämpfungskanal
- 18: Bypasskanal
- 19: Ventil
- 20: Elektromagnet
- 21: Rückstellfeder
- 22: Gehäuse
- 23: Stellglied
- 24: Dichtelement
- 25: Führung
- 26: Ventilöffnung

- A: Strömungsrichtung

## Patentansprüche

1. Hydrolager (10), insbesondere zur Lagerung eines Kraftfahrzeugmotors an einer Fahrzeugkarosserie, mit einer Tragfeder (11), die einen Lagerkern (12) abstützt und eine Arbeitskammer (13) umschließt, und einer Ausgleichskammer (14), die von der Arbeitskammer (13) durch eine Zwischenplatte (15) getrennt und von einer Ausgleichsmembran (16) begrenzt ist, wobei die Ausgleichskammer (14) und die Arbeitskammer (13) mit einer Flüssigkeit gefüllt und über einen in der Zwischenplatte (15) angeordneten Dämpfungskanal (17) und über einen Bypasskanal (18), dem ein schaltbares Ventil (19) zugeordnet ist, miteinander verbunden sind, wobei das Ventil (19) auf Seiten der Arbeitskammer (13) angeordnet ist, mittels eines Elektromagneten (20) schaltbar ist und ein Stellglied (23) aufweist, das in axialer Richtung verstellbar ist, **dadurch gekennzeichnet, dass** das Ventil (19) ein Gehäuse (22) mit einer zentralen Führung (25) aufweist und ausgebildet ist, um auf Seiten der Arbeitskammer (13) aus radialer Richtung angeströmt zu werden.

2. Hydrolager (10) nach Anspruch 1, **dadurch gekennzeichnet, dass** das Stellglied (23) eine Rückstellfeder (21) zum Schließen des Ventils aufweist.

3. Hydrolager (10) nach Anspruch 1 oder 2, **dadurch gekennzeichnet, dass** das Stellglied (23) T-förmig ausgebildet ist.

4. Hydrolager (10) nach einem der Ansprüche 1 bis 3, **dadurch gekennzeichnet, dass** das Stellglied (23) wenigstens ein Dichtelement (24) an seinem Außenumfang aufweist.

5. Hydrolager (10) nach Anspruch 2, **dadurch gekennzeichnet, dass** die Führung (25) das Stellglied (23) und die Rückstellfeder (21) führt.

6. Hydrolager (10) nach einem der Ansprüche 1 bis 5, **dadurch gekennzeichnet, dass** das Ventil (19) Ventilöffnungen (26) aufweist, die am Außenumfang des Ventils (19) angeordnet sind.

## Claims

1. Hydromount (10), in particular for mounting a motor vehicle engine on a vehicle body, with a suspension spring (11) which supports a bearing core (12) and encloses a working chamber (13), and with a compensation chamber (14) which is separated from the working chamber (13) by way of an intermediate plate (15) and is delimited by a compensation diaphragm (16), the compensation chamber (14) and the working chamber (13) being filled with a liquid and being connected to one another via a damping channel (17) which is arranged in the intermediate plate (15) and via a bypass channel (18) which is assigned a switchable valve (19), the valve (19) being arranged on the side of the working chamber (13), being capable of being switched by an electromagnet (20), and having an actuator (23) which can be adjusted in the axial direction, **characterized in that** the valve (19) has a housing (22) with a central guide (25) and is configured to be flowed onto from a radial direction on the side of the working chamber (13).

2. Hydromount (10) according to Claim 1, **characterized in that** the actuator (23) has a restoring spring (21) for closing the valve.

3. Hydromount (10) according to Claim 1 or 2, **characterized in that** the actuator (23) is of T-shaped configuration.

4. Hydromount (10) according to one of Claims 1 to 3, **characterized in that** the actuator (23) has at least one sealing element (24) on its outer periphery.

5. Hydromount (10) according to Claim 2, **characterized in that** the guide (25) guides the actuator (23) and the restoring spring (21).

6. Hydromount (10) according to one of Claims 1 to 5, **characterized in that** the valve (19) has valve openings (26) which are arranged on the outer periphery of the valve (19).

## Revendications

1. Palier hydraulique (10), notamment pour le montage d'un moteur de véhicule automobile sur une carrosserie de véhicule, pourvu d'un ressort porteur (11), qui soutient une partie centrale de palier (12) et entoure une chambre de travail (13), et d'une chambre de compensation (14), qui est séparée de la chambre de travail (13) par une plaque intermédiaire (15) et qui est délimitée par une membrane de compensation (16), la chambre de compensation (14) et la chambre de travail (13) étant remplies d'un liquide et étant reliées l'une à l'autre par l'intermédiaire d'un canal d'amortissement (17) agencé dans la plaque intermédiaire (15) et par l'intermédiaire d'un canal de dérivation (18) auquel est associée une soupape commutable (19), la soupape (19) étant agencée sur des côtés de la chambre de travail (13), pouvant être commutée au moyen d'un électroaimant (20) et comprenant un organe de réglage (23), qui peut être réglé dans la direction axiale, **caractérisé en ce que** la soupape (19) comprend un boîtier (22) pourvu d'un guide central (25) et est configurée pour recevoir un écoulement à partir de la direction radiale sur des côtés de la chambre de travail (13).

2. Palier hydraulique (10) selon la revendication 1, **caractérisé en ce que** l'organe de réglage (23) comprend un ressort de rappel (21) pour la fermeture de la soupape.

3. Palier hydraulique (10) selon la revendication 1 ou 2, **caractérisé en ce que** l'organe de réglage (23) est configuré en forme de T.

4. Palier hydraulique (10) selon l'une quelconque des revendications 1 à 3, **caractérisé en ce que** l'organe de réglage (23) comprend au moins un élément d'étanchéité (24) sur sa circonférence extérieure.

5. Palier hydraulique (10) selon la revendication 2, **caractérisé en ce que** le guide (25) guide l'organe de réglage (23) et le ressort de rappel (21).

6. Palier hydraulique (10) selon l'une quelconque des revendications 1 à 5, **caractérisé en ce que** la soupape (19) comprend des ouvertures de soupape (26), qui sont agencées sur la circonférence extérieure de la soupape (19) .
